**Europäisches Patentamt**

**European Patent Office**

**Office européen des brevets**

(11) Veröffentlichungsnummer: **0 232 718**
**A2**

(12) # EUROPÄISCHE PATENTANMELDUNG

(21) Anmeldenummer: **87100224.2**

(22) Anmeldetag: **09.01.87**

(51) Int. Cl.4: **H02B 1/06** , H02G 5/06

(30) Priorität: **23.01.86 DE 3601988**

(43) Veröffentlichungstag der Anmeldung:
**19.08.87 Patentblatt 87/34**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Wagener, Hans**
**Rittershauser Strasse 14**
**D-6344 Dietzhölztal 2(DE)**

(74) Vertreter: **Vogel, Georg**
**Hermann-Essig-Strasse 35**
**D-7141 Schwieberdingen(DE)**

(54) **Vorrichtung zum Abdecken von auf Sammelschienen befestigten elektrischen Geräten.**

(57) Die Erfindung betrifft eine Vorrichtung zum Abdecken von auf Sammelschienen eines Sammelschienensystems befestigten elektrischen Geräten mit einer maximalen Bauhöhe, bei der die Oberseiten der Sammelschienen im gleichen Befestigungsabstand zur Befestigungsfläche der die Sammelschienen aufnehmenden und festlegenden Halter angeordnet sind. Eine universell verwendbare Abdeckung, die nicht an den Geräten, sondern an den Sammelschienen festgelegt werden kann, ergibt sich nach der Erfindung dadurch, daß die Abdeckung als im Querschnitt rechteckförmige Abdeckkappe mit Deckplatte und Abdeckseitenwänden ausgebildet ist, daß die einen Abdeckseitenwände parallel zu den Sammelschienen ausgerichtet sind und eine lichte Höhe zur Deckplatte aufweisen, die mindestens der Summe aus Befestigungsabstand und Bauhöhe entspricht, daß die anderen Abdeckseitenwände sich über die äußeren Sammelschienen des Sammelschienensystems hinaus erstrecken und der Deckplatte abgekehrt mit Aussparungen versehen sind, die senkrecht zur Deckplatte eine dem Befestigungsabstand entsprechende Tiefe aufweisen, daß auf der Innenseite der Deckplatte mindestens eine auf eine Sammelschiene ausgerichtete Halteklammer angebracht ist, mit einem Halteschenkel quer zur Sammelschiene gerichtet ist und diese hintergreift, und daß die Aussparungen parallel zur Deckplatte eine Abmessung aufweisen, die dem Außenabstandsmaß der äußeren Sammelschienen plus einem Verstellmaß, das mindestens gleich dem Haltemaß des Halteschenkels ist, entspricht.

Fig.1

# Vorrichtung zum Abdecken von auf Sammelschienen befestigten elektrischen Geräten

Die Erfindung betrifft eine Vorrichtung zum Abdecken von auf Sammelschienen eines Sammelschienensystems befestigten elektrischen Geräten mit einer maximalen Bauhöhe, bei der die Oberseiten der Sammelschienen im gleichen Befestigungsabstand zur Befestigungsfläche der die Sammelschienen aufnehmenden und festlegenden Halter angeordnet sind.

In Sammelschienensystemen mit mehreren, parallel zueinander verlaufenden Sammelschienen werden die verschiedensten elektrischen Geräte, wie Sicherungshalter, Trennschalter, Abzweigklemmen und dgl., befestigt. Dabei ist es erwünscht, die auf den Sammelschienen befestigten elektrischen Geräte berührungssicher abzudecken.

Aus dem DE-GM 85 11 030 ist eine Vorrichtung zum Abdecken von Sicherungshaltern bekannt. Diese bekannte Vorrichtung weist eine boxartige Abdeckplatte auf, die mit einer der Anzahl der Sicherungen entsprechenden Anzahl von Durchbrüchen versehen ist. Auf der Unterseite trägt die Abdeckplatte um die Durchbrüche Führungsstege, mit denen die Abdeckplatte auf die Gewindehülsen des Sicherungshalters aufgesteckt werden können. An die Schmalseiten der Abdeckplatte sind Seitenplatten ansteckbar, die bis zur Befestigungsfläche der die Sammelschienen aufnehmenden und festlegenden Halter reichen. Die Seitenplatten sind an den freien, der Befestigungsfläche zugekehrten Kanten mit Bruchlinien zum Ausbrechen von Kabel-Einführungsöffnungen versehen.

Diese bekannte Vorrichtung ist speziell für die Abdeckung von Sicherungshaltern geschaffen, bei der die Sicherungen ohne Abnahme der Abdeckung ausgewechselt werden können.

Neben den Sicherungshaltern werden aber auf den Sammelschienen auch andere elektrische Geräte befestigt, auf die nicht auf so einfache Weise eine Abdeckung aufgesteckt und daran festgelegt werden kann.

Es ist Aufgabe der Erfindung, eine Vorrichtung der eingangs erwähnten Art zu schaffen, mit der die verschiedenartigsten, elektrischen Geräte berührungssicher abgedeckt werden können, ohne daß die Abdeckung an den Geräten selbst befestigt werden muß.

Diese Aufgabe wird nach der Erfindung dadurch gelöst, daß die Abdeckung als im Querschnitt rechteckförmige Abdeckkappe mit Deckplatte und Abdeckseitenwänden ausgebildet ist, daß die einen Abdeckseitenwände parallel zu den Sammelschienen ausgerichtet sind und eine lichte Höhe zur Deckplatte aufweisen, die mindestens der Summe aus Befestigungsabstand und Bauhöhe entspricht, daß die anderen Abdeckseitenwände sich über die äußeren Sammelschienen des Sammelschienensystems hinaus erstrecken und der Deckplatte abgekehrt mit Aussparungen versehen sind, die senkrecht zur Deckplatte eine dem Befestigungsabstand entsprechende Tiefe aufweisen, daß auf der Innenseite der Deckplatte mindestens eine auf eine Sammelschiene ausgerichtete Halteklammer angebracht ist, mit einem Halteschenkel quer zur Sammelschiene gerichtet ist und diese hintergreift, und daß die Aussparungen parallel zur Deckplatte eine Abmessung aufweisen, die dem Außenabstandsmaß der äußeren Sammelschienen plus einem Verstellmaß, das mindestens gleich dem Haltemaß des Halteschenkels ist, entspricht.

Die Abdeckkappe dieser Art wird an den Sammelschienen festgelegt und erlaubt die Abdeckung von Geräten bis zur maximalen Bauhöhe, die von der Oberseite der Sammelschienen gemessen wird. Die Abdeckseitenwände decken auf den parallel zu den Sammelschienen verlaufenden Seiten das Sammelschienensystem mit den Geräten bis zur Befestigungsfläche der Halter ab. Die Abdeckseitenwände, die senkrecht zu den Sammelschienen stehen, reichen bis zu den Oberseiten der Sammelschienen und decken die auf den Sammelschienen befestigten Geräte seitlich ab. Die so ausgelegte Abdeckkappe kann auch zur Abdeckung von Leerräumen des Sammelschienensystems benützt werden, in denen keine Geräte mit den Sammelschienen befestigt sind. Dabei schließt die Deckplatte bündig mit den Deckplatten benachbarter Abdeckkappen ab. Ein Sammelschienensystem kann daher auf seiner gesamten Länge berührungssicher abgedeckt werden. Dabei läßt sich die für Sicherungshalter bekannte Vorrichtung bündig in die Abdeckung mit erfindungsgemäßen Abdeckkappen einbeziehen, wenn die maximale Bauhöhe durch die Sicherungshalter vorgegeben ist.

Nach einer Ausgestaltung ist vorgesehen, daß der Halteschenkel Teil einer Aufnahme einer U-förmig ausgebildeten Halteklammer ist und daß die Aufnahme eine Breite aufweist, die mindestens gleich der maximalen Dicke der Sammelschienen ist. Die Aufnahme umfaßt dabei die Sammelschiene an der Ober-und Unterseite.

Um die Abdeckkappe spielfrei auf den Sammelschienen zu halten, sieht eine Ausgestaltung vor, daß der Abstand des Halteschenkels der Halteklammer von der Innenseite der Deckplatte gleich der Summe aus der maximalen Bauhöhe und der maximalen Dicke der Sammelschienen ist und daß der Halteschenkel der Halteklammer die Sammelschiene mit Paß-und/oder Preßsitz hintergreift. Bei dieser Ausgestaltung können die Halteklammern einstückig an der Abdeckkappe angeformt sein.

Eine eindeutige Festlegung der Abdeckkappen an den Sammelschienen läßt sich nach einer Ausgestaltung dadurch erreichen, daß der Halteschenkel Teil einer U-förmigen Halteklammer ist, daß der dem Halteschenkel gegenüberliegende Seitenschenkel der Halteklammer mit einer Gewindebohrung versehen ist, daß die Halteklammer zwischen dem Halteschenkel und dem Seitenschenkel mit der Gewindebohrung eine Aufnahme für eine Sammelschiene bildet, deren Breite größer ist als die maximale Dicke der Sammelschienen, daß die Halteklammer senkrecht zur Deckplatte verstellbar, jedoch unverdrehbar geführt ist und daß in die Gewindebohrung eine Schraube eingeschraubt ist, die axial unverschiebbar, jedoch frei drehbar in der Deckplatte gehalten ist.

Die unverlierbare Festlegung der Schraube an der Abdeckplatte ist dabei so gelöst, daß die Schraube mit einem Kopf versehen ist, der in einer topfartigen Vertiefung der Deckplatte versenkt angeordnet ist und daß die Schraube auf der Innenseite der Deckplatte mittels eines in eine Ringnut eingeführten Sicherungselementes unverlierbar an der Abdeckkappe gehalten ist, während für die unverdrehbare Führung der Halteklammer vorgesehen ist, daß die Halteklammer auf den beiden parallel zu den Abdeckseitenwänden mit den Aussparungen verlaufenden Seitenflächen mit Führungsnuten versehen sind, die senkrecht zur Deckplatte gerichtet sind, daß in die Führungsnuten Führungsstege der Abdeckkappe eingreifen, die an den Innenseiten der Abdeckseitenwände mit den Aussparungen und/oder an parallel zu diesen Abdeckseitenwänden stehenden Führungsplatten senkrecht zur Deckplatte stehend angeformt sind.

Für die Verstellung der Halteklammer wird nach einer Ausgestaltung vorgesehen, daß die Halteklammer eine Gewindebohrung aufweist, die länger als die Breite der Aufnahme der Halteklammer ist und daß die Länge der Schraube so bemessen ist, daß bei der Anlage des dem Halteschenkel gegenüberliegenden Seitenschenkels an der Oberseite der Sammelschiene die Schraube mit ihrem Gewindeteil noch teilweise in der Gewindebohrung eingeschraubt ist. Damit ist auch ein unbeabsichtigtes Lösen der Halteklammer von der Schraube beim Abnehmen der Abdeckkappe von dem Sammelschienensystem verhindert.

Ist weiterhin vorgesehen, daß die Schraube so bemessen ist, daß bei der Anlage des Halteschenkels an der Unterseite der Sammelschiene die Schraube noch nicht über die ganze Länge der Gewindebohrung eingeschraubt ist, dann kann die Schraube nicht mit der Sammelschiene in Verbindung kommen, so daß durchaus eine Metall-Schraube verwendbar ist.

Eine eindeutige, unverdrehbare Festlegung der Abdeckkappe wird nach einer Ausgestaltung dadurch erreicht, daß den beiden äußeren Sammelschienen jeweils eine Halteklammer zugeordnet ist und daß die beiden Halteklammern im Bereich der beiden Abdeckseitenwände mit Aussparungen vorgesehen sind.

Das Verstellen der Abdeckkappe in die Haltestellung der Halteklammern wird dadurch erleichtert, daß die Abdeckseitenwände mit den Aussparungen an den parallel zur Deckplatte verlaufenden Kanten mit Ansätzen versehen, die durch Anschlag an den Sammelschienen die Verstellung der Halteschenkel der Halteklammern hinter die Sammelschienen begrenzen.

Ist weiterhin vorgesehen, daß die parallel zu den Sammelschienen verlaufenden Abdeckseitenwände der Abdeckkappe im Anschluß an die Deckplatte mit Lüftungsschlitzen versehen sind, die mit ihren Längsabmessungen vorzugsweise senkrecht zur Deckplatte stehen, dann lassen sich die abgedeckten elektrischen Geräte belüften.

Der Anschluß der abgedeckten Geräte wird wiederum dadurch ermöglicht, daß die parallel zu den Sammelschienen verlaufenden Abdeckseitenwände der Abdeckkappe mit Sollbruchstellen zum Ausbrechen von Kabeleinführungsöffnungen versehen sind, die zur freien Kante dieser Abdeckseitenwände hin offen sind.

Die Kennzeichnung der abgedeckten Geräte wird dadurch auf einfachste Weise realisiert, daß auf der Außenseite der Deckplatte eine nutartige Vertiefung zum Einsetzen eines Kennzeichenstreifens eingebracht ist, die parallel zu den Sammelschienen verläuft.

Soll mit ein und derselben Vorrichtung auch ein Sammelschienensystem abgedeckt werden, bei dem die beiden äußeren Sammelschienen unterschiedliche Abstände einnehmen können, dann sieht eine vorteilhafte Weiterbildung vor, daß auf der Außenseite der Deckplatte eine nutartige Vertiefung zum Einsetzen eines Kennzeichenstreifens eingebracht ist, die parallel zu den Sammelschienen verläuft.

Die beiden identischen Hälften können über die Abdeckstreifen ineinander gesteckt werden, wobei sie die Deckplatte zwischen den beiden Trennkanten der ineinander gesteckten Hälften vervollständigen. Dabei kann nahezu die Abmessung der Abdeckkappe senkrecht zu den Sammelschienen im Verhältnis 1:2 verändert werden, wenn die Ausgestaltung so ist, daß die Abdeckstreifen senkrecht zur Trennkante eine Abmessung aufweisen, die um die Dicke der parallel zu der Trennkante stehenden Abdeckseitenwände kleiner ist als die Abmessung der Deckplatte senkrecht zur Trennkante.

Ist nach einer weiteren Ausgestaltung vorgesehen, daß die Hälften auf den Innenseiten ihrer senkrecht zu der Trennkante stehenden und auf der halben Breite ohne Abdeckstreifen angeordneten Abdeckseitenwänden mit einem Führungssteg versehen sind, der senkrecht zur Trennkante steht, daß die Abdeckstreifen entlang ihrer Außenlängsseiten mit Seitenwandteilen versehen sind und daß auf den Außenflächen der um die Dicke der Abdeckseitenwände nach innen versetzten Seitenwandteile die Führungsstege aufnehmende Führungsnuten eingebracht sind, dann werden auch die senkrecht zu den Sammelschienen stehenden Abdeckseitenwände der zusammengesteckten Abdeckkappe unabhängig von der eingestellten Stellung der Hälften vervollständigt.

Eine eindeutige Führung beim Steckvorgang läßt sich dadurch erzielen, daß die Führungsstege und die Führungsnuten T-förmigen, aufeinander abgestimmten Querschnitt aufweisen, während die eingestellte Stellung der Hälften mittels Stellschrauben festlegbar ist, die die Führungsstege in den zugeordneten Führungsnuten festhalten.

Eine Anpassung der Halteklammern an die unterschiedlichen Abstände der Sammelschienen ist dabei einfach dadurch möglich, daß die Halteklammer in mehreren Stellungen zwischen den Abdeckseitenwänden und den Führungsplatt einführbar sind, wobei die einander zugekehrten Seiten der Abdeckseitenwände und der Führungsplatten aufeinander ausgerichtet mehrere Führungsstege angeformt sind und daß die topfartige Vertiefung in der Deckplatte der Hälften der Abdeckkappe langlochartig ausgebildet und mit entsprechenden Durchbrüchen versehen sind.

Die Erfindung wird anhand eines in den Zeichnungen dargestellten Ausführungsbeispiels näher erläutert. Es zeigt:

Fig. 1 einen Schnitt senkrecht zu den Sammelschienen, der die mit den Sammelschienen verbundene Abdeckkappe zeigt,

Fig. 2 die Ansicht auf die Innenseite der Abdeckkappe,

Fig. 3 den Schnitt durch die Abdeckkappe entlang der Linie III-III der Fig. 2,

Fig. 4 in vergrößertem Maßstab eine Schraube zur Festlegung an der Abdeckkappe und Verstellung einer Halteklammer,

Fig. 5 die vergrößerte Seitenansicht der Halteklammer,

Fig. 6 die Ansicht auf die Stirnseite der Halteklammer mit der Gewindebohrung,

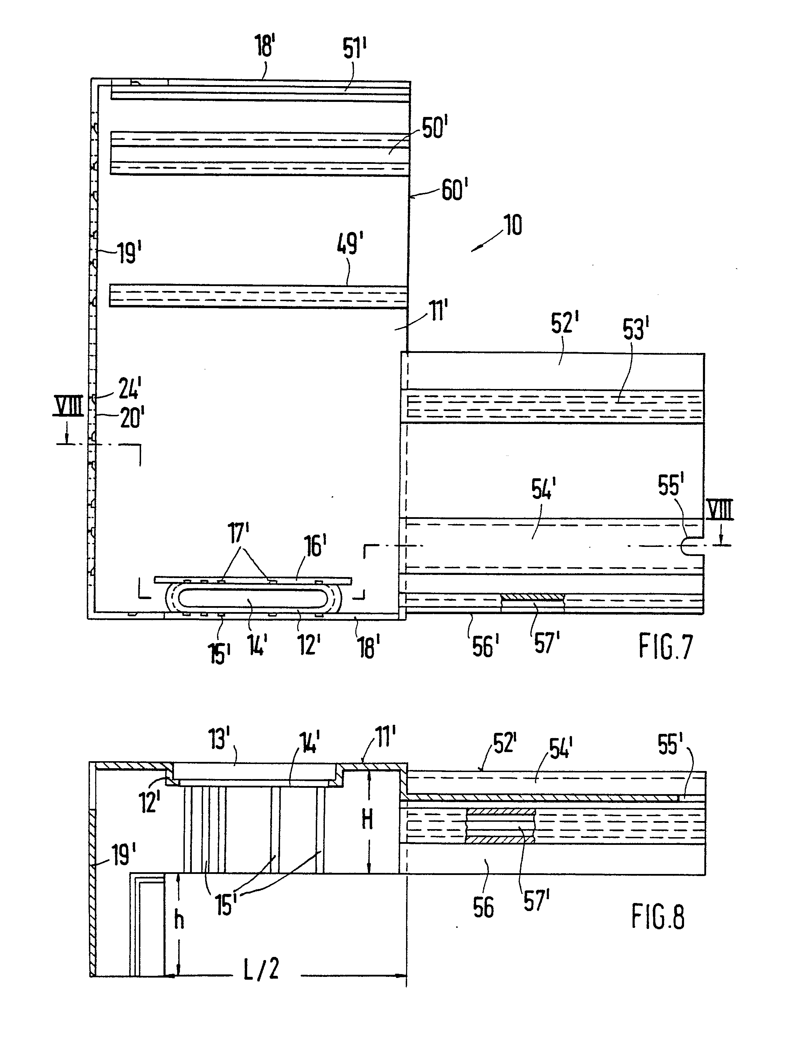

Fig. 7 die Ansicht auf die Unterseite einer Hälfte einer parallel zu den abzudeckenden Sammelschienen geteilten Abdeckkappe,

Fig. 8 einen Längsschnitt durch die Abdeckkape entlang der Linie VIII-VIII der Fig. 7,

Fig. 9 die Ansicht auf die Unterseite einer aus zwei identischen Hälften zusammengesteckten und fixierten Abdeckkappe und

Fig. 10 einen Längsschnitt durch die zusammengesteckte Abdeckkappe entlang der Linie X-X der Fig. 9.

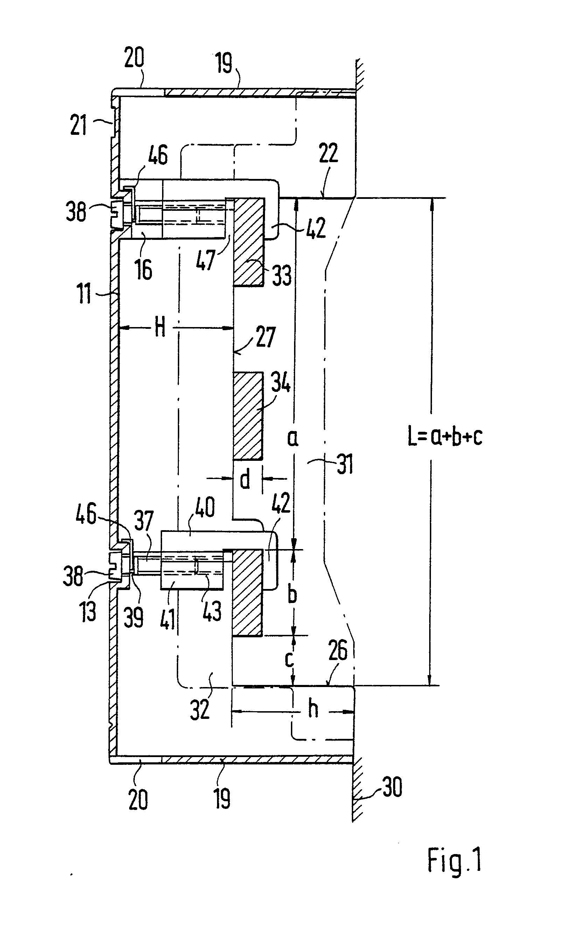

Wie der Schnitt nach Fig. 1 zeigt, weist das Sammelschienensystem im Ausführungsbeispiel die drei Sammelschienen 33, 34 und 35 auf, die in dem aus dem Unterteil 31 und dem Oberteil 32 bestehenden Halter auf der Befestigungsfläche 30 befestigt sind. Die Sammelschienen 33, 34 und 35 sind in regelmäßigen Abständen zueinander in dem Halter so gehalten, daß ihre Oberseiten in einer gemeinsamen Befestigungsebene im Befestigungsabstand h zur Befestigungsfläche 30 gehalten und festgelegt sind. Auf den Sammelschienen 33, 34 und 35 können die verschiedenartigsten elektrischen Geräte befestigt werden. Voraussetzung dazu ist jedoch, daß diese eine maximale Bauhöhe H nicht überschreiten. Diese Bauhöhe H kann z.B. auch die Bauhöhe sein, die bei der bekannten Abdeckung für einen Sicherungshalter für die Abdeckplatte gilt.

Die Sammelschienen 33, 34 und 35 haben dieselbe Dicke d, die ebenfalls einen maximalen Wert nicht übersteigen kann. Unabhängig davon, welche Dicke d die Sammelschienen 33, 34 und 35 aufweisen, ist durch Einsatzstücke sichergestellt, daß die Oberseiten der Sammelschienen 33, 34 und 35 stets im Befestigungsabstand h zur Befestigungsfläche 30 stehen.

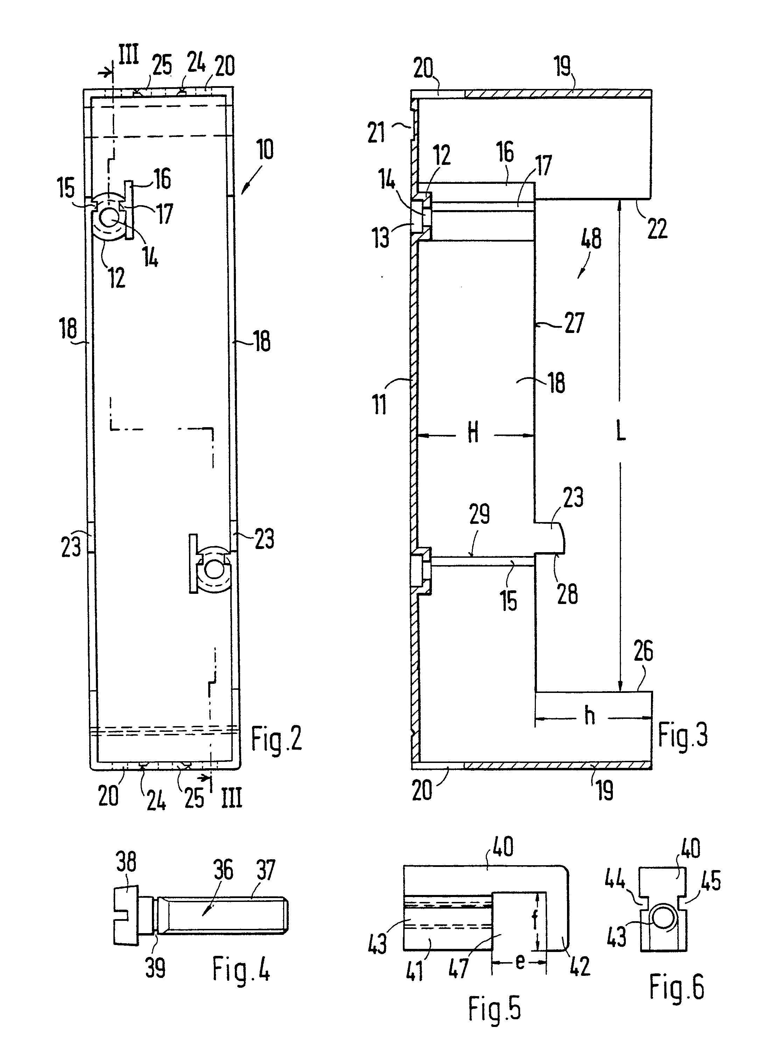

Wie die Fig. 2 und 3 zeigen, ist die Abdeckung als im Querschnitt rechteckförmige Abdeckkappe 10 mit der Deckplatte 11 und den Abdeckseitenwänden 18 und 19 ausgebildet. Die Abdeckkappe 10 ist so auf das Sammelschienensystem aufgesetzt, daß die Abdeckseitenwände 19 parallel zu den Sammelschienen 33, 34 und 35 verlaufen. Im Anschluß an die Deckplatte 11 sind in die Abdeckseitenwände 19 die Lüftungsschlitze 20 eingebracht, die mit ihren Längsabmessungen senkrecht zur Deckplatte 11 ausgerichtet sind. Im Bereich der freien, der Befestigungsfläche 30 zugekehrten Seiten sind die Abdeckseitenwände 19 mit Sollbruchstellen 24 zum Ausbrechen der Wandteile 24 versehen, um Kabel-Einführungsöffnungen vorsehen zu können. Die lichte Höhe der Abdeckseitenwände 19 entspricht der Summe aus dem Befestigungsabstand h und der maximalen Bauhöhe H.

Die Deckplatte 11 trägt auf der Außenseite die Vertiefung 21, die ebenfalls parallel zu den Sammelschienen 33, 34 und 35 verläuft und einen Kennzeichenstreifen aufnehmen kann.

Die Abdeckseitenwände 18 sind der Deckplatte 11 abgekehrt mit fluchtenden Aussparungen 48 versehen. Die senkrecht zur Deckplatte 11 stehende Abmessung der Aussparungen 48 an den Kanten 22 und 26 entspricht dem Befestigungsabstand h. Die parallel zur Deckplatte 11 gerichtete Länge L der Aussparungen 48 entspricht dem Außenabstandsmaß a + b der äußeren Sammelschienen 33 und 35 plus einem Freimaß c.

In der Deckplatte 11 sind Vertiefungen 12 vorgesehen, die eine Aufnahme 13 für den Kopf 38 der Schraube 36 nach Fig. 4 bilden. Die Bohrung 14 geht durch die Vertiefung 12 der Deckplatte 11 hindurch. Die Schraube 36 kann auf der Innenseite der Deckplatte 11 in der Ringnut 39 das Sicherungselement 46 aufnehmen. Die Schraube 36 ist daher unverlierbar an der Abdeckkappe 10 gehalten, sie kann axial nicht verschoben werden, ist jedoch frei drehbar. Der Kopf 38 der Schraube 36 ist in der Aufnahme 13 der Vertiefung 12 versenkt.

Die Schraube 36 ist mit dem Gewindeteil 37 in die Gewindebohrung 43 im Seitenschenkel 41 der Halteklammer 40 nach Fig. 5 und 6 eingeschraubt. Die Halteklammer 40 bildet mit diesem Seitenschenkel 41 und dem Halteschenkel 42 die Aufnahme 47 mit der Breite e und der Tiefe f. Die Halteklammer 40 kann mit der eingeschraubten Schraube 36 in Richtung zur und von der Deckplatte 11 verstellt werden, sie ist aber dabei unverdrehbar geführt. Dazu bilden die Führungsplatten 16 mit den Abdeckseitenwänden 18 eine Führungsaufnahme, die mit aufeinander ausgerichteten Führungsstegen 15 und 17 versehen sind. Die Führungsstege 15 und 17 stehen senkrecht zur Deckplatte 11 und sind so ausgelegt, daß sie in die Führungsnuten 44 und 45 der Halteklammer 40 eingreifen. Die Führungsnuten 44 und 45 sind in den Seiten der Halteklammer 40 eingebracht, die parallel zu den Abdeckseitenwänden 18 stehen. Die Halteklammern 40 sind so in die Führungsaufnahmen eingesetzt, daß die Aufnahmen 47 aller Halteklammern 40 zu derselben Abdeckseitenwand 19 gerichtet sind.

Die Halteklammern 40 mit den Halteschenkeln 42 können einstückig oder fest mit der Abdeckkappe 10 verbunden sein, wenn die Halteschenkel 42 einen Abstand von der Innenseite der Deckplatte 11 aufweisen, der durch die Summe aus der maximalen Bauhöhe H und der gegebenen Dicke d der Sammelschienen 33, 34 und 35 gegeben ist.

Sollen jedoch unterschiedlich dicke Sammelschienen 33, 34 und 35 im Sammelschienensystem verwendbar sein, dann muß auch der Abstand des Halteschenkels 42 zur Deckplatte 11 einstellbar sein. Dies ist mit der Schraube 36 möglich.

Wie Fig. 1 zeigt, hintergreifen die Halteschenkel 42 der Halteklammern 40 die Sammelschienen 33, 34 und 35, wobei die Tiefe f der Aufnahme 47 voll ausgeschöpft wird. Schließt die Kante 22 der Aussparungen 48 in den Abdeckseitenwänden 18 mit dem Boden der Aufnahme 47 der der Sammelschiene 33 zugeordneten Halteklammer 40 bündig ab, dann ist das Freimaß c durch die Tiefe f der Aufnahme 47 bestimmt. Die Abdeckkappe 10 kann aus der Befestigungsstellung nach Fig. 1 dann soweit nach oben verstellt werden, daß die Halteschenkel 42 freiliegen und daß die Abdeckkappe 10 nach vorne abgezogen werden kann. Der Abstand von der oberen zu der unteren Halteklammer 40 ist so gewählt, daß dieser den Abstand a der beiden äußeren Sammelschienen 33 und 35 entspricht. Bei der oberen Halteklammer 40 wird die eine Abdeckseitenwand 18 mit dem Führungssteg 15 mit in die Führungsaufnahme einbezogen, während bei der unteren Halteklammer 40 die andere Abdeckseitenwand 18 den Führungssteg 15 trägt und Teil der Führungsaufnahme für die Halteklammer 40 ist.

Die Kante 27 der Aussparungen 48 in den Abdeckseitenwänden 18 trägt Ansätze 23, die in Verbindung mit der unteren Sammelschiene 35 die Aufsteckbewegung der Halteklammer 40 auf die Sammelschienen 33, 34 und 35 begrenzt. Die Breite e der Aufnahmen 47 der Halteklammern 40 ist etwas größer als die maximale Dicke d der Sammelschienen 33, 34 und 35. Die Gewindebohrung 43 ist so bemessen, daß in der Befestigungsstellung nach Fig. 1 die Schraube 36 noch nicht die ganze Länge der Gewindebohrung 43 belegt. Die das Metall bestehende Schraube 36 kann dann nicht mit der Sammelschiene in Verbindung kommen. Wird die Schraube 36 gelöst, dann verstellt sich die Halteklammer 40 von der Deckplatte 11 weg, bis der Seitenschenkel 41 der Halteklammer 40 an der Oberseite der Sammelschiene anliegt. Die Schraube 36 ist dabei aber noch teilweise in die Gewindebohrung 43 eingeschraubt. Die Halteklammer 40 kann sich daher nicht von der Schraube 36 lösen. Sind beide Schrauben 36 so gelöst, daß die Seitenschenkel 41 an den Sammelschienen anliegen, dann kann die Abdeckkappe 10 so weit nach oben verschoben werden, daß die Halteschenkel 42 freiliegen. Die Abdeckkappe 10 kann dann nach vorne von dem Sammelschienensystem abgenommen werden.

Die Breite der Abdeckkappe 10, d.h. die Abmessung der Abdeckseitenwände 19 parallel zu den Sammelschienen 33, 34 und 35 kann auf ein bestimmtes Rastermaß gelegt und ein ganzzahliges Vielfaches dieses Rastermaßes betragen. Das Rastermaß ist aus der Einbaubreite der elektrischen Geräte abgeleitet. Die Abdeckseitenwände 18 mit den Aussparungen 48 sind in erster Linie auf das Einbaumaß der Halter für die Sammelschienen abgestimmt.

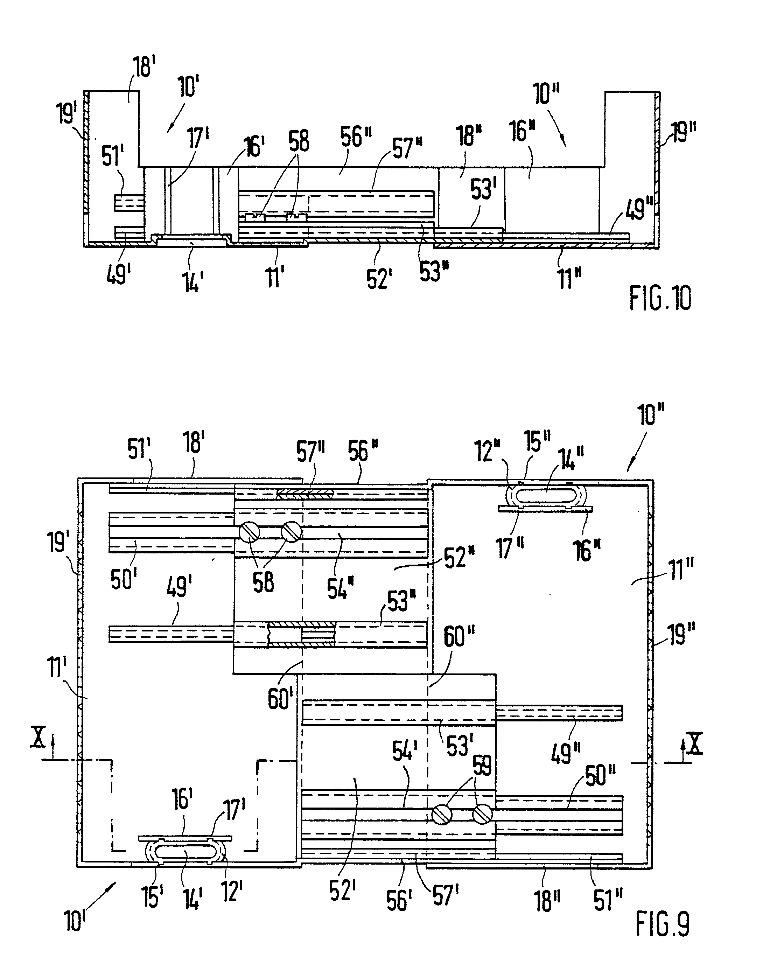

Wird eine boxartige Abdeckkappe 10 nach Fig. 1 in der Mitte der zu den Sammelschienen senkrecht stehenden Abdeckseitenwänden 18 geteilt, dann entstehen zwei identische Hälften. Diese Hälften 10' können parallel zu den Sammelschienen unterschiedliche Breiten aufweisen, wie die in den Fig. 9 und 10 dargestellte Hälfte 10' zeigt. Die Trennkante 60' verläuft parallel zu der Abdeckseitenwand 19' mit den Lüftungsschlitzen 20' und den Sollbruchstellen 24'.

Die topfartige Vertiefung 12' mit dem langlochartigen Durchbruch 14' ist so ausgebildet, daß die Schraube für die Halteklammer 40 verschiedene Stellungen einnehmen kann. Diese Stellungen werden bestimmt durch die Führungsstege 15' auf der Innenseite der Abdeckseitenwand 18' und die Führungsstege 17' an der Führungsplatte 16'. Die Führungsstege 15' und 17' bilden Paare für die Führungsnuten der Halteklammer, so daß diese in vorgegebenen Stellungen an der Hälfte 10' senkrecht zur Deckplatte 11' verstellbar geführt werden kann. Auf diese Weise lassen sich die Halteklammern an unterschiedliche Abstände der Sammelschienen anpassen.

Die Deckplatte 11' erstreckt sich über die halbe Abmessung L, wie mit der eingezeichneten Abmessung L/2 gezeigt ist. Die Deckplatte 11' ist im Bereich der Trennkante 60' über die halbe Breite mittels des Abdeckstreifens 52' verlängert und zwar um etwa die Abmessung L/2 reduziert um die Dicke der Abdeckwand 19'. Außerdem ist an der Außenlängskante des Abdeckstreifens 52' ein Seitenwandteil 56' angeformt, das um die Dicke der Abdeckseitenwand 18' nach innen versetzt ist, und dieselbe Höhe H aufweist. Auf der Oberseite des Abdeckstreifens 52' sind senkrecht zur Trennkante 60' stehende, als im Querschnitt T-förmige Nuten ausgebildete Führungsnuten 53' und 54' eingeformt, während die Außenseite des Seitenwandteiles 56' die ebenfalls als T-förmige Nut ausgebildete Führungsaufnahme 57' trägt. Die Hälfte 10' trägt außerdem auf der Innenseite der Deckplatte 11' -und zwar in dem Bereich derselben ohne Abdeckstreifen 52' -die im Querschnitt T-förmigen Führungsstege 49' und 50', die auf die Führungsaufnahmen 53" und 54" einer identischen Hälfte 10" abgestimmt sind, wie die Fig. 9 und 10 zeigen. Die zugeordnete Abdeckseitenwand 18' der Hälfte 10' trägt auf der Innenseite den senkrecht zur Trennkante 60' stehenden Führungssteg 51', der in die Führungsaufnahme 57" der Hälfte 10" einsteckbar ist. Die Hälfte 10" wird um 180° gedreht mit der Hälfte 10' zu einer Abdeckkappe zusammengesteckt. Dabei werden die Führungsstege 49", 50" und 51" der Hälfte 10" in die Führungsaufnahmen 53', 54' und 57' der Hälfte 10' eingesteckt, während die Führungsstege 49', 50' und 51' in die Führungsaufnahmen 53", 54" und 57" der Hälfte 10" eingeführt werden. Die Hälften 10' und 10" können so weit zusammengesteckt werden, bis die Trennkanten 60' und 60" aneinanderliegen. Die um die Dicke der Deckplatten 11' und 11" nach innen versetzten Abdeckstreifen 52' und 52" mit den Seitenwandteilen 56' und 56" sind dabei in den Innenraum der Hälften 10' und 10" eingeschoben, so daß sie auf deren Innenseiten anliegen. Die Hälften 10' und 10" sind dabei auf die kleinste, senkrecht zu den Sammelschienen gerichtete Abmessung eingestellt. Mit den Stellschrauben 58 und 59 kann die Stellung der Führungsstege 50' und 50" in den Führungsaufnahmen 54" und 54' festgelegt werden. Das freie Ende der Führungsaufnahmen 54' und 54" ist dabei mit einem Aufnahmeschlitz 55' für die Stellschraube 58 bzw. 59 versehen.

Werden die Hälften 10' und 10" bei gelösten Stellschrauben 58 und 59 auseinandergezogen, dann kann die Abmessung der zusammengesetzten Abdeckkappe senkrecht zu den Sammelschienen verändert werden und zwar solange die Führungsstege noch in den Führungsaufnahmen geführt und arretierbar sind. Die Abmessung der Abdeckstreifen 52' und 52" senkrecht zur Trennkante 60' und 60" ist etwa derselben Abmessung der Hälften 10' und 10", reduziert um die Dicke der Abdeckseitenwände 19' und 19". Damit läßt sich die kleinste Abmessung der Abdeckkappe einstellen, während in der anderen Endstellung der Hälften 10' und 10" die Abmessung fast verdoppelt ist. Dabei vervollständigen die zwischen den Trennkanten 60' und 60" liegenden Bereiche der Abdeckstreifen 52' und 52" mit ihren Seitenwandteilen 56' und 56" die zusammengesetzte Abdeckkappe.

Die Schrauben für die Halteklammern werden in die langlochartigen Durchbrüche 14' und 14" der Vertiefungen 12' und 12" eingeführt und in die Halteklammern eingeschraubt. Dabei können die Halteklammern verschiedene, durch die Führungsstege 15' und 17' bzw. 15" und 17" gebildeten Paare in verschiedenen Stellungen senkrecht zur Deckplatte 11' bzw. 11" verstellbar geführt werden, um auf unterschiedliche Abstände der Sammelschienen angepaßt zu werden.

## Ansprüche

1. Vorrichtung zum Abdecken von auf Sammelschienen eines Sammelschienensystems befestigten elektrischen Geräten mit einer maximalen Bauhöhe, bei der die Oberseiten der Sammelschienen im gleichen Befestigungsabstand zur Befestigungsfläche der die Sammelschienen aufnehmenden und festlegenden Halter angeordnet sind, dadurch gekennzeichnet, daß die Abdeckung als im Querschnitt rechteckförmige Abdeckkappe (10) mit Deckplatte (11) und Abdeckseitenwänden (18,19) ausgebildet ist, daß die einen Abdeckseitenwände (19) parallel zu den Sammelschienen (33,34,35) ausgerichtet sind und eine lichte Höhe zur Deckplatte (11) aufweisen, die mindestens der Summe aus Befestigungsabstand (h) und Bauhöhe (H) entspricht, daß die anderen Abdeckseitenwände (18) sich über die äußeren Sammelschienen (33 und 35) des Sammelschienensystems hinaus erstrecken und der Deckplatte (11) abgekehrt mit Aussparungen - (48) versehen sind, die senkrecht zur Deckplatte - (11) eine dem Befestigungsabstand (h) entsprechende Tiefe aufweisen, daß auf der Innenseite der Deckplatte (11) mindestens eine auf eine Sammelschiene (33,34,35) ausgerichtete Halteklammer (40) angebracht ist, mit einem Halteschenkel (42) quer zur Sammelschiene gerichtet ist und diese hintergreift, und daß die Aussparungen (48) parallel zur Deckplatte - (11) eine Abmessung aufweisen, die dem Außenabstandsmaß (a + b) der äußeren Sammelschienen (33 und 35) plus einem Verstellmaß (c), das mindestens gleich dem Haltemaß (f) des Halteschenkels (42) ist, entspricht.

2. Vorrichtung nach Anspruch 1, dadurch gekennzeichnet, daß der Halteschenkel (42) Teil einer Aufnahme - (47) einer U-förmig ausgebildeten Halteklammer - (40) ist und daß die Aufnahme (47) eine Breite (e) aufweist, die mindestens gleich der maximalen Dicke (d) der Sammelschienen (33,34,35) ist.

3. Vorrichtung nach Anspruch 1 oder 2, dadurch gekennzeichnet, daß der Abstand des Halteschenkels (42) der Halteklammer (40) von der Innenseite der Deckplatte - (11) gleich der Summe aus der maximalen Bauhöhe (H) und der maximalen Dicke (d) der Sammelschienen (33,34,35) ist.

4. Vorrichtung nach Anspruch 3, dadurch gekennzeichnet, daß der Halteschenkel (42) der Halteklammer (40) die Sammelschiene (33,34,35) mit Paß-und/oder Preßsitz hintergreift.

5. Vorrichtung nach Anspruch 1 oder 2, dadurch gekennzeichnet, daß der Halteschenkel (42) Teil einer U-förmigen Halteklammer (40) ist, daß der dem Halteschenkel (42) gegenüberliegende Seitenschenkel (41) der Halteklammer (40) mit einer Gewindebohrung (43) versehen ist, daß die Halteklammer (40) zwischen dem Halteschenkel (42) und dem Seitenschenkel (41) mit der Gewindebohrung (43) eine Aufnahme (47) für eine Sammelschiene (33,34,35) bildet, deren Breite (e) größer ist als die maximale Dicke (d) der Sammelschienen, daß die Halteklammer (40) senkrecht zur Deckplatte (11) verstellbar, jedoch unverdrehbar geführt ist und daß in die Gewindebohrung (43) eine Schraube - (36) eingeschraubt ist, die axial unverschiebbar, jedoch frei drehbar in der Deckplatte (11) gehalten ist.

6. Vorrichtung nach Anspruch 5, dadurch gekennzeichnet, daß die Schraube (36) mit einem Kopf (38) ersehen ist, der in einer topfartigen Vertiefung (12) der Deckplatte (11) versenkt angeordnet ist und daß die Schraube (36) auf der Innenseite der Deckplatte (11) mittels eines in eine Ringnut (39) eingeführten Sicherungselementes (46) unverlierbar an der Abdeckkappe (10) gehalten ist.

7. Vorrichtung nach Anspruch 5 oder 6, dadurch gekennzeichnet, daß die Halteklammer (40) auf den beiden parallel zu den Abdeckseitenwänden (18) mit den Aussparungen (48) verlaufenden Seitenflächen mit Führungsnuten (44,45) versehen sind, die senkrecht zur Deckplatte (11) gerichtet sind, daß in die Führungsnuten (44,45) Führungsstege - (15,17) der Abdeckkappe (10) eingreifen, die an den Innenseiten der Abdeckseitenwände (18) mit den Aussparungen (48) und/oder an parallel zu diesen Abdeckseitenwänden (18) stehenden Führungsplatten (16) senkrecht zur Deckplatte (11) stehend angeformt sind.

8. Vorrichtung nach einem der Ansprüche 5 bis 7, dadurch gekennzeichnet, daß die Halteklammer (40) eine Gewindebohrung - (43) aufweist, die länger als die Breite (e) der Aufnahme (47) der Halteklammer (40) ist und daß die Länge der Schraube (36) so bemessen ist, daß bei der Anlage des dem Halteschenkel (42) gegenüberliegenden Seitenschenkels (41) an der Oberseite der Sammelschiene (33,34,35) die Schraube (36) mit ihrem Gewindeteil (37) noch teilweise in der Gewindebohrung (43) eingeschraubt ist.

9. Vorrichtung nach einem der Ansprüche 5 bis 8,
dadurch gekennzeichnet,
daß die Schraube (36) so bemessen ist, daß bei der Anlage des Halteschenkels (42) an der Unterseite der Sammelschiene (33,34,35) die Schraube (36) noch nicht über die ganze Länge der Gewindebohrung (43) eingeschraubt ist.

10. Vorrichtung nach einem der Ansprüche 1 bis 9,
dadurch gekennzeichnet,
daß den beiden äußeren Sammelschienen (33 und 35) jeweils eine Halteklammer (40) zugeordnet ist, und daß die beiden Halteklammern (40) im Bereich der beiden Abdeckseitenwände (18) mit Aussparungen (48) vorgesehen sind.

11. Vorrichtung nach einem der Ansprüche 1 bis 10,
dadurch gekennzeichnet,
daß die Abdeckseitenwände (18) mit den Aussparungen (48) an den parallel zur Deckplatte (11) verlaufenden Kanten (27) mit Ansätzen (23) versehen, die durch Anschlag an den Sammelschienen (33,34,35) die Verstellung der Halteschenkel (42) der Halteklammern (40) hinter die Sammelschienen (33,34,35) begrenzen.

12. Vorrichtung nach einem der Ansprüche 1 bis 11,
dadurch gekennzeichnet,
daß die parallel zu den Sammelschienen (33,34,35) verlaufenden Abdeckseitenwände (19) der Abdeckkappe (10) im Anschluß an die Deckplatte (11) mit Lüftungsschlitzen (20) versehen sind, die mit ihren Längsabmessungen vorzugsweise senkrecht zur Deckplatte (11) stehen.

13. Vorrichtung nach einem der Ansprüche 1 bis 12,
dadurch gekennzeichnet,
daß die parallel zu den Sammelschienen (33,34,35) verlaufenden Abdeckseitenwände (19) der Abdeckkappe (10) mit Sollbruchstellen (24) zum Ausbrechen von Kabeleinführungsöffnungen versehen sind, die zur freien Kante dieser Abdeckseitenwände (19) hin offen sind.

14. Vorrichtung nach einem der Ansprüche 1 bis 13,
dadurch gekennzeichnet,
daß auf der Außenseite der Deckplatte (11) eine nutartige Vertiefung (21) zum Einsetzen eines Kennzeichenstreifens eingebracht ist, die parallel zu den Sammelschienen (33,34,35) verläuft.

15. Vorrichtung nach einem der Ansprüche 1 bis 14,
dadurch gekennzeichnet,
daß die Abdeckkappe parallel zu den Sammelschienen in zwei identische Hälften (10',10") mit je einer Halteklammer (40) unterteilt ist,
daß im Bereich der Trennkante (60',60") der Hälften (10',10") ein sich über die halbe Breite der Deckplatte (11',11") erstreckender, um die Dicke der Deckplatte (11',11") nach innen versetzter Abdeckstreifen (52',52") angeformt ist,
daß der Abdeckstreifen (52',52") auf seiner Oberseite mit senkrecht zur Trennkante stehenden Führungsstegen (53',54' bzw. 53",54") versehen ist und
daß die Hälften (10',10") auf der Unterseite ihrer Deckplatten (11',11") auf der halben Breite ohne Abdeckstreifen (52',52") mit die Führungsstege (53',54' bzw. 53",54") einer zweiten Hälfte aufnehmenden Führungsnuten (49',50' bzw. 49",50") versehen sind.

16. Vorrichtung nach Anspruch 15,
dadurch gekennzeichnet,
daß die Abdeckstreifen (52',52") senkrecht zur Trennkante (60',60") eine Abmessung aufweisen, die um die Dicke der parallel zu der Trennkante (60',60") stehenden Abdeckseitenwände (19) kleiner ist als die Abmessung der Deckplatte (11',11") senkrecht zur Trennkante (60',60").

17. Vorrichtung nach Anspruch 16 oder 17,
dadurch gekennzeichnet,
daß die Hälften (10',10") auf den Innenseiten ihrer senkrecht zu der Trennkante (60',60") stehenden und auf der halben Breite ohne Abdeckstreifen (52',52") angeordneten Abdeckseitenwänden (18',18") mit einem Führungssteg (51',51") versehen sind, der senkrecht zur Trennkante (60',60") steht,
daß die Abdeckstreifen (52',52") entlang ihrer Außenlängskanten mit Seitenwandteilen (56',56") versehen sind und
daß auf den Außenflächen der um die Dicke der Abdeckseitenwände (18',18") nach innen versetzten Seitenwandteile (56',56") die Führungsstege (51',51") aufnehmende Führungsnuten (57',57") eingebracht sind.

18. Vorrichtung nach einem der Ansprüche 15 bis 17,
dadurch gekennzeichnet,
daß die Führungsstege (51',53',54',51",53",54") und die Führungsnuten (49',50',57',49",50",57") T-förmigen, aufeinander abgestimmten Querschnitt aufweisen.

19. Vorrichtung nach einem der Ansprüche 15 bis 18,
dadurch gekennzeichnet,
daß die Stellung einer aus zwei Hälften (10',10") zusammengesteckten Abdeckkappe mittels die Führungsstege (z.B. 50',50") in den zugeordneten Führungsnuten (z.B. 54",54') haltenden Stellschrauben (58,59) festgelegt ist.

20. Vorrichtung nach einem der Ansprüche 6, 7, 15 bis 19, dadurch gekennzeichnet,
daß die Halteklammer (40) in mehreren Stellungen zwischen den Abdeckseitenwänden (18',18") und den Führungsplatten (16′,16″) einführbar sind, wobei die einander zugekehrten Seiten der Abdeckseitenwände (18′,18″) und der Führungsplatten (16′,16″) aufeinander ausgerichtet mehrere Führungsstege (15′,17′) angeformt sind, und

daß die topfartige Vertiefung (12′,12″) in der Deckplatte (11′,11″) der Hälften (10′,10″) der Abdeckkappe langlochartig ausgebildet und mit entsprechenden Durchbrüchen (14′,14″) versehen sind.

Fig.1

Fig.2

Fig.3

Fig.4

Fig.5

Fig.6

FIG.7

FIG.8

FIG.10

FIG.9